(19) Europäisches Patentamt
European Patent Office
Office européen des brevets

(11) Publication number: **0 367 158 B1**

(12) **EUROPEAN PATENT SPECIFICATION**

(45) Date of publication of patent specification: **01.12.93**

(51) Int. Cl.5: **C08G 81/00**

(21) Application number: **89120049.5**

(22) Date of filing: **28.10.89**

The file contains technical information submitted after the application was filed and not included in this specification

(54) **Preparation of poly(aryl ether/thioether)-polyester block copolymers.**

(30) Priority: **03.11.88 US 266595**

(43) Date of publication of application:
**09.05.90 Bulletin 90/19**

(45) Publication of the grant of the patent:
**01.12.93 Bulletin 93/48**

(84) Designated Contracting States:
**AT BE CH DE ES FR GB IT LI NL**

(56) References cited:
**EP-A- 0 279 196**
**EP-A- 0 353 478**
**US-A- 4 668 744**

**Advances in Polymer Synthesis 1985, New York and London pages 93 - 112; J. LAMBERT et al.: "Synthesis of Segmented Poly[arylene ether sulfone]-Poly[arylene terephthalate] Copolymers"**

(73) Proprietor: **THE DOW CHEMICAL COMPANY**
**2030 Dow Center**
**Abbott Road**
**P.O. Box 1967**
**Midland Michigan 48640-1967(US)**

(72) Inventor: **Mullins, Michael J.**
**710 Chatham Drive**
**Midland Michigan 48640(US)**
Inventor: **Murray, Daniel J.**
**3211 Garland**
**Midland Michigan 48640(US)**
Inventor: **Woo, Edmund P.**
**300 Mayfield Lane**
**Midland Michigan 48640(US)**

(74) Representative: **Sternagel, Hans-Günther, Dr. et al**
**Patentanwälte Dr. Michael Hann, Dr. H.-G. Sternagel, Dr. H. Dörries,**
**Sander Aue 30**
**D-51465 Bergisch Gladbach (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 367 158 B1

## Description

This invention relates to poly(ether ester) copolymers. More particularly, the invention relates to novel poly(aryl ether/thioether)-polyester block copolymers, and to their preparation.

The procedure of blending combinations of polymers for commercial use is commonly practiced in order to improve one or more properties of one of the polymers by the addition of another. When the polymers form a compatible single-phase homogeneous blend, the properties of the blend generally are intermediate between the properties of the starting homopolymers. In this fashion, improved molding compositions may be obtained at minimal additional cost.

Combinations of polymers which are miscible (single phase and mutually soluble), and which therefore form homogeneous blends, are rare. Generally polymer blends consist of immiscible segregated domains which suffer from poor adhesion with one another, resulting in finished molded products exhibiting poor ductility and impact resistance. Even commercially available polymer blends, wherein adhesion between phases is improved by partial mutual solubility or the addition of a third component compatibilizing agent, suffer from poor, anisotropic mechanical properties, particularly at weld lines. Although the severity of weld line strength diminution may be partially controlled by the adjustment of fabrication conditions and mold design, these limitations place a great burden on the molded piece manufacturer.

One method for circumventing the aforementioned difficulties is to prepare a copolymer comprising blocks of the two or more polymers of interest. Because the block segments are covalently bonded together, the problems associated with interfacial adhesion are significantly reduced or eliminated. The morphology, and therefore the properties of the block copolymer, may be controlled by varying the relative amounts of each block segment and their lengths. Block copolymers can exhibit morphologies which range from two-phase segregated materials to single-phase homogeneous materials.

When considering combinations of poly(aryl ethers/thioethers) and polyesters, the difficulties involved in the preparation of block copolymers tend to discourage their use. Webster and McGrath, "Poly(Aryl Ether)-Poly(Arylate) Block Copolymers: I Polysulfone-Bis-A Terephthalate Systems," Polymer Science, v. 4 (1984), pp. 959-975 and U.S. Patent No. 4,668,744 disclose the preparation of block copolymers containing poly(ether sulfone) and a polyarylate as follows:

A)

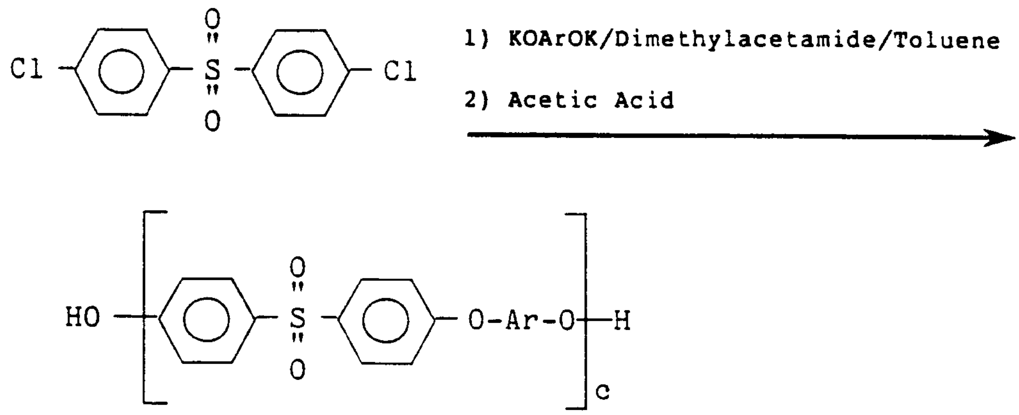


B)

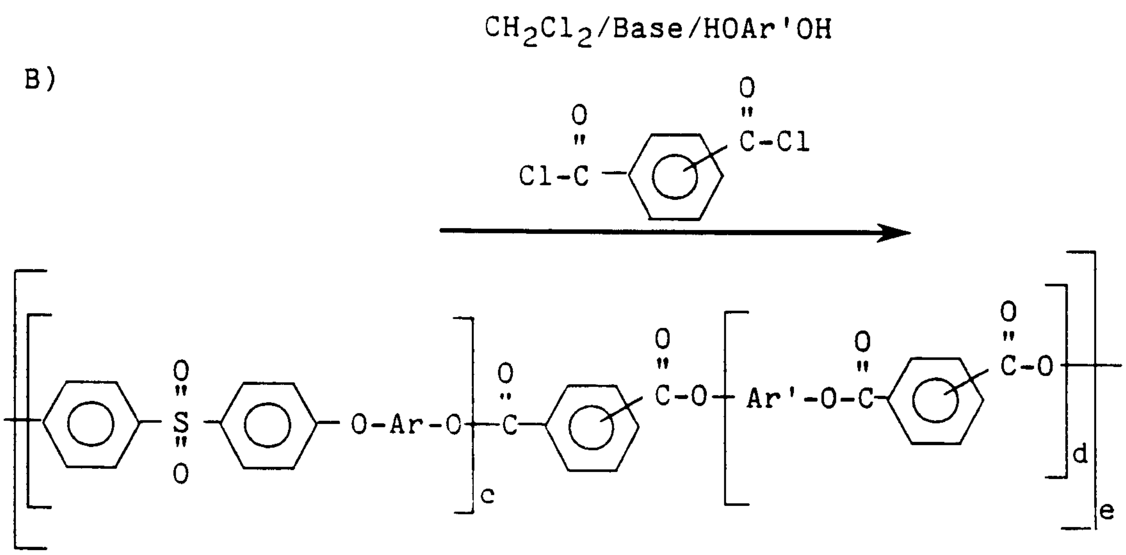


wherein Ar and Ar′ are both independently an aromatic structure, such as for example:

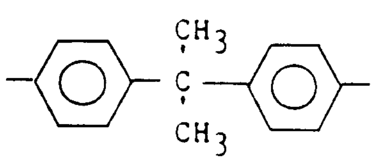
.

This previous art method for preparing poly(aryl ether ester) block copolymers requires that an aryl ether oligomer of the length desired for the ultimate block copolymer be prepared separately. Subsequently, the oligomer, which must have phenolic end groups, is then contacted with a diacid chloride and base in solution, thereby preparing a block poly(aryl ether ester) copolymer. The resultant aryl ether block segments are joined to the aryl ester blocks as represented by the following general formula:

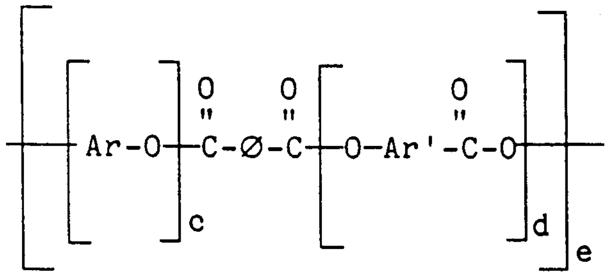

wherein Ar represents the aromatic portion of the aryl ether, Ar' represents the aromatic portion of the aryl ester, and Ø represents the aromatic portion of the diacid chloride starting material. It is apparent that the aromatic portion of the aryl ether block is joined to the remainder of the copolymer molecule, at both ends of the aryl ether block segment, through ester linkages, thus:

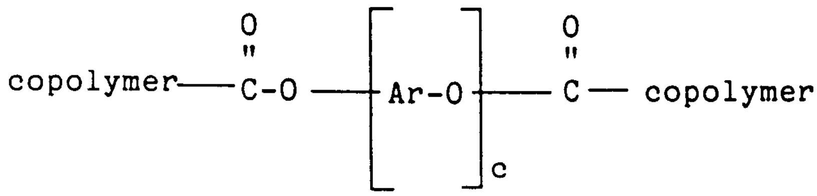

The present invention is directed toward a novel class of homogeneous poly(aryl ether/thioether)-polyester block copolymers, comprising:

one or more activated poly(aryl ether/thioether) blocks comprising from 2 to 50 repeat units corresponding to the general formulae:

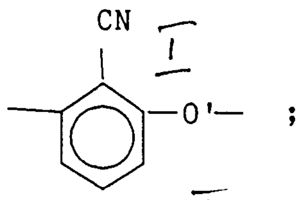
I ;

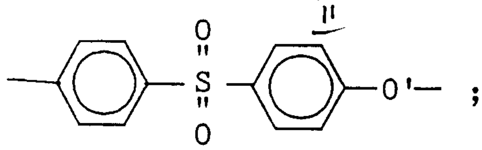
II ;

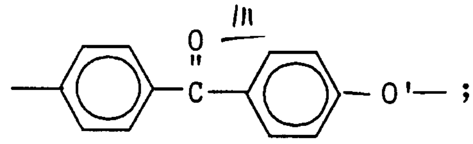
III ;

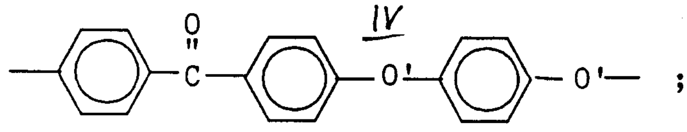
IV ;

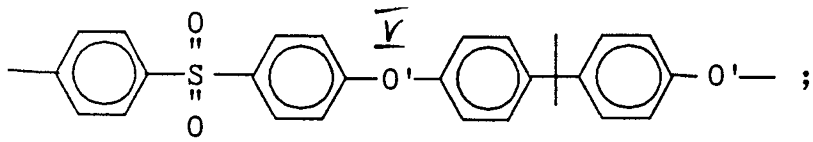
V ;

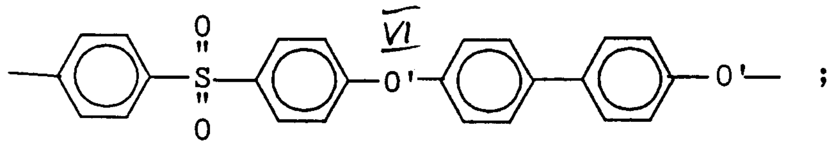
VI ;

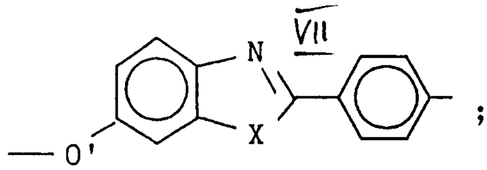
VII ;

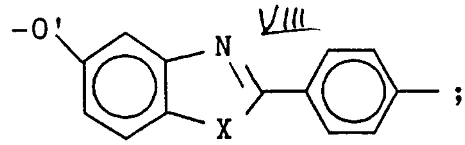
VIII ;

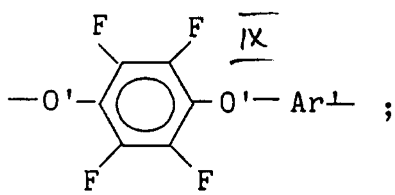
IX ;

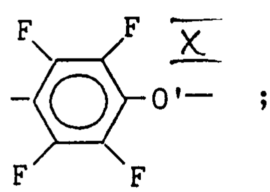
X ;

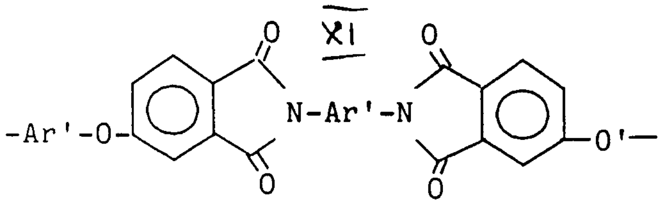
XI

or

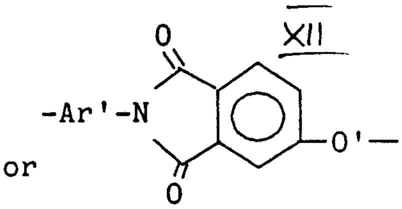
XII ,

wherein each Ar' is independently m-phenylene, p-phenylene, p-$C_6H_4C(CH_3)_2$p-$C_6H_4$, p-$C_6H_4O$p-$C_6H_4$, p-$C_6H_4S$p-$C_6H_4$, p-$C_6H_4CH_2$p-$C_6H_4$, p-$C_6H_4C_6H_4$, or p-$C_6H_4SO_2$p-$C_6H_4$; X is N-R, S or O; O' is oxygen in the case of an ether and sulfur in the case of a thioether;

and one or more ester blocks comprising from 2 to 50 aliphatic or aromatic repeat units corresponding to the

formulae:

XIII

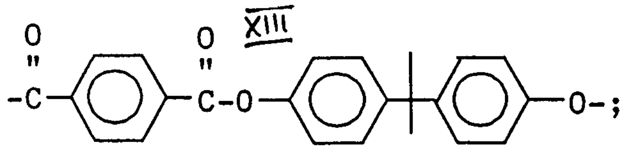

XIV

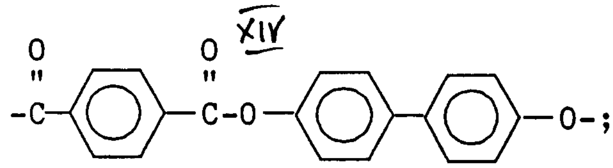

XV

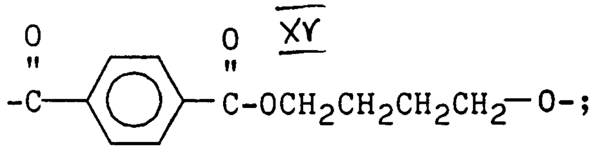

XVI

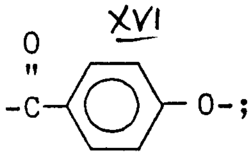

XVII

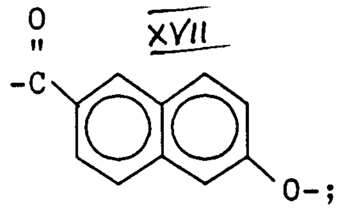

XVIII

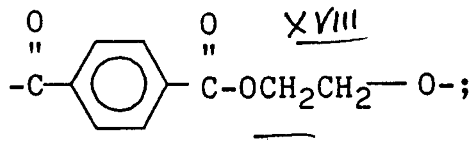

XIX

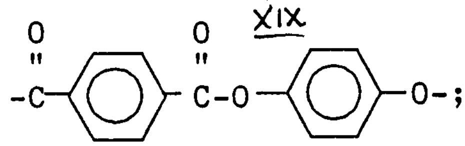

XX

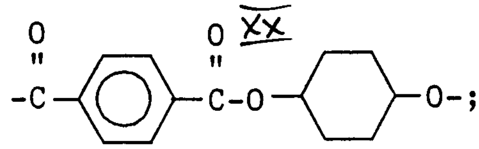

XXI

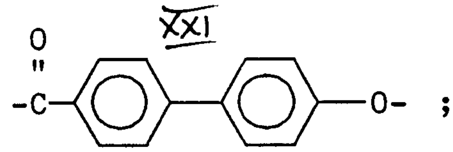

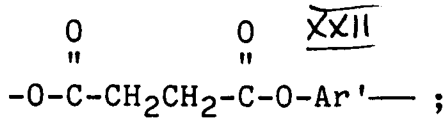
XXII

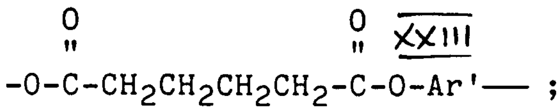
XXIII

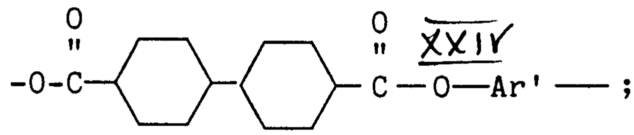
XXIV
; or

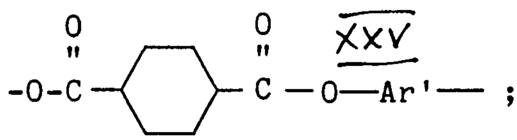
XXV

wherein Ar' is as previously defined.

These block copolymers are distinct from the block copolymers of the prior art in that the aromatic portion of the aryl ether/thioether blocks are joined to the remainder of the copolymer molecule by one ether/thioether linkage and one ester linkage, thus:

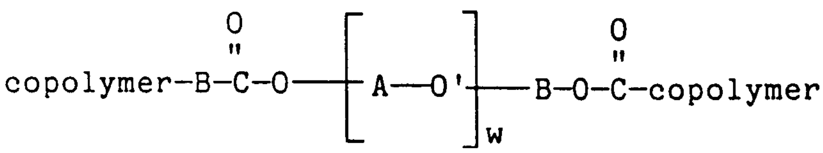

wherein -A-O'- is one of the aryl ether/thioether repeat units I to XII, w is the number of repeat units forming the poly(aryl ether/thioether) block, -B-CO-O- is the carboxylate terminus of a polyester polymer block, and -B-O-CO- is the (formerly) hydroxylated terminus of a polyester polymer block, the hydroxyl group having been used up for etherification with the poly(aryl ether/thioether) block.

These block copolymers are surprisingly prepared by:
contacting at least one activated poly(aryl ether) or poly(aryl thioether) comprising from 2 to 50 repeat units corresponding to the aforesaid formulae I to XII with at least one aliphatic or aromatic polyester polymer comprising from 2 to 50 repeat units corresponding to the aforesaid formulae XIII to XXV in the presence of an exchange catalyst corresponding to the formula $M_pZ_q$,

wherein M represents a monovalent or multivalent metal ion, Z is a halide, carbonate, bicarbonate, phenoxide, alkoxide, cyanide, nitrate, nitrite, hydroxide, phosphate, or aryl or alkyl carboxylate ion, and p and q are each independently whole numbers in the range from 1 to 6 which satisfy chemical valency requirements,

at a temperature from 100°C to 400°C and above the highest glass transition temperature of the polymers for a time sufficient to cause formation of the block copolymer wherein the lengths of the copolymer blocks are decreased in comparison with the respective lengths of the starting homopolymers molecules.

The poly(aryl ether/thioether)-polyester block copolymers of the present invention exhibit high temperature stability and excellent thermoplastic engineering properties, as well as superior solvent resistance, making them particularly suited for producing molded plastic components for the automotive and electrical housings markets.

Accordant with the present invention, poly(aryl ether/thioether)-polyester block copolymers may be prepared by reacting together activated poly(aryl ether/thioether) polymers with polyester polymers, in the presence of an exchange catalyst, to form a poly(aryl ether/thioether)-polyester block copolymer.

As indicated above, the poly(aryl ether/thioether)-polyester block copolymers of the present invention may contain either poly(aryl ether) block segments or poly(aryl thioether) block segments, or mixtures thereof. A thioether is understood to mean an ether compound wherein a sulfur atom is substituted for the

normally present ether oxygen atom.

The term activated ether/thioether, as used herein, means that the particular aromatic radical contains at least one electron-withdrawing group at a position ortho or para to its ether/thioether linking group. Suitably any activated poly(aryl ether/thioether) polymer may be employed in preparing the copolymers of the present invention, provided that it contains at least one electron-withdrawing group at a position ortho or para (preferably para) to its ether/thioether linking group. The poly(aryl ether/thioether) polymers of the present invention may be prepared by known conventional chemical reactions, such as for example by the polycondensation of an aromatic acid in the presence of a boron trifluoride-hydrogen fluoride catalyst. See U.S. Patent No. 3,442,857.

Alternatively, poly(aryl ether/thioether) polymers may be prepared by the polycondensation of the anhydrous alkali metal salt of an aryl fluoride in the presence of diphenyl sulphone solvent, as disclosed in Attwood et al., Polymer, vol. 22, p. 1096 (1981).

Additional methods for preparing poly(aryl ethers/thioethers) are disclosed in British Patents Nos. 971,227, 1,177,183 and 1,387,303, and in U.S. Patent No. 4,175,175.

Suitable electron-withdrawing groups may be, divalent groups at the para position such as for example -CO-, -CONH-, -SO-, $-SO_2-$, $-^+NR_2-$, $-^+PR_2-$, $-^+SR-$, -P(O)R-, $-C(CF_3)_2-$, -CH=CH-, -NN-, -CHNNCH-, imidazolenyl, oxazolenyl, pyrazolenyl, isoxazolenyl, oxypyrazolenyl, benzoquinonenyl, benzoxazolenyl and benzothiazolenyl, or monovalent groups at the ortho position such as for example -CN, $-NO_2$, -CHO, $-CO_2R$, $-CO_2NH_2$, $-P(O)(OR)_2$, -P(O)R, $-CF_3$, $-^+PR_3$, $-^+NR_3$ and $-^+SR_2$, wherein R is independently each occurrence a $C_1$-$C_{12}$ alkyl radical.

Preferred activated poly(aryl ethers/thioethers) are poly(ether sulfone) and poly(ether ether ketone).

The polyesters suitable for use according to the present invention may be generally prepared by condensing aromatic or aliphatic dicarboxylic acids with diols, or by condensing precursors which contain both an alcohol or phenol and a carboxylic acid. Suitable aromatic dicarboxylic acids include for example terephthalic acid, isophthalic acid, naphthalenedicarboxylic acid, diphenyletherdicarboxylic acid, diphenyldicarboxylic acid, diphenylsulfonedicarboxylic acid, and diphenoxyethanedicarboxylic acid. Suitable aliphatic dicarboxylic acids include sebacic acid, octadecanoic acid, suberic acid, adipic acid, azelaic acid, succinic acid, undecanedioic acid, glutaric acid, pimelic acid and oxalic acid. Examples of suitable aromatic diols are hydroquinone, resorcinol, 2,2-bis-(4-hydroxyphenyl)propane, bis-(4-hydroxyphenyl)methane, 4,4′-thiodiphenol, bis-(4-hydroxyphenyl)sulfone, 4,4′-oxydiphenyl, 4,4′-dihydroxybiphenyl, and dihydroxynaphthalenes. The aliphatic diols suitable for preparation of the aromatic poly(aryl esters) include for example ethylene glycol, 1,3-propylene glycol, 1,4-butanediol, 1,5-pentanediol, 1,6-hexanediol, and cyclohexane dimethylol. Examples of precursors which contain both an alcohol and a carboxylic acid are 4-hydroxybenzoic acid and 2-hydroxy-6-naphthoic acid.

Polyesters may be prepared from these precursors using any of the several well known methods, such as for example the reaction of the acid chloride of a carboxylic acid with an alcohol or phenol in the presence of a base; dehydration of an acid and alcohol or phenol through physical or chemical means; reaction of the ester derivative of a carboxylic acid (such as a methyl or phenyl ester) with an alcohol or phenol; or reaction of a carboxylic acid with a derivative (such as an acetate) of an alcohol or phenol.

By the term polyester, as used in the present invention, is also contemplated copolyesters, which may be prepared by cocondensing one or more dicarboxylic acids with one or more diols. Also contemplated are liquid crystalline polyesters derived from mixtures of 4-hydroxybenzoic acid and 2-hydroxy-6-naphthoic acid; or mixtures of terephthalic acid, 4-hydroxybenzoic and ethylene glycol; or mixtures of terephthalic acid, 4-hydrobenzoic acid, and 4,4'-dihydroxybiphenyl.

Specific methods for preparing polyesters are more fully set forth in U.S. Patents Nos. 2,465,319 and 3,047,539. Polyesters may also be derived from a mixture of terephthalic and isophthalic acids and various diols including Bisphenol A, ethylene glycol, 1,4-butanediol and 1,4-cyclohexanedimethanol.

An exchange catalyst suitable for use in the present invention is represented by the formula:

$$M_pZ_q$$

wherein M represents a monovalent or multivalent metal ion, Z is a halide, carbonate, bicarbonate, phenoxide, bisphenoxide, alkoxide, cyanide, nitrate, nitrite, hydroxide, phosphate, or aryl or alkyl carboxylate radical, and p and q are whole numbers in the range from 1 to 6 which satisfy chemical valency requirements. An effective amount of catalyst, according to the present invention, is that amount which will catalyze the reaction between a poly(aryl ether/thioether) and a polyester to prepare a poly(aryl ether/thioether)polyester block copolymer. Preferred catalysts, according to the present invention, are cesium fluoride, cesium carbonate and cesium phenoxide. A most preferred catalyst is cesium fluoride.

The block copolymerization of the present invention is carried out by blending a poly(aryl ether/thioether) polymer and a polyester polymer, at a temperature at least as high as the highest of the glass transition temperatures of the polymers, in the presence of an exchange catalyst, and optionally in the presence of a solvent. High boiling point solvents, such as for example diphenyl sulfone or benzophenone, are preferred. The solvent may comprise up to 80 percent by weight of the reaction mixture, and preferably up to 33 percent by weight. In a more preferred embodiment of the present invention, the reaction is conducted in the absence of a solvent, where mixing equipment is capable of stirring together the starting polymers. Copolymerization is allowed to proceed until the desired block segment lengths are achieved, as determined by experimentation, at which time the reaction is terminated. The reaction is typically effected at temperatures in the range from 100 ° C to 400 ° C, depending upon the glass transition temperatures of the polymers; preferably the range is from 250 ° C to 350 ° C; most preferably, the effective temperature range is from 280 ° C to 340 ° C. The catalyst is preferably employed in an amount in the range from 0.01 to 10.0 weight percent relative to the total weight of polymers; more preferably the range is from 0.1 to 5.0 weight percent; most preferably, the effective range is from 0.1 to 2.0 weight percent.
The numbers of repeat units of the poly (aryl ether/thioether) blocks and of the aliphatic or aromatic polyester blocks in the copolymers as well as of the poly (aryl ether/thioether) polymers and of the aliphatic or aromatic polyester polymers, serving as starting compounds, are each independently conveniently in the range of 2 to 50; preferably 2 to 40; more preferably the range is 2 to 30; most preferably the range is from 4 to 20. However, it must be understood that the exchange reaction, by which the poly(aryl ether/thioether)-polyester block copolymers may be prepared, may produce block copolymers in which the numbers of repeat units are each independently any value greater than 2, having a maximum value depending upon the lengths of the starting polymers.

The block copolymers of the present invention may be prepared by contacting, under poly(aryl ether/thioether)-polyester block copolymer forming conditions, varying quantities of activated poly(aryl ether/thioether) polymers with polyester polymers, wherein the ratio of poly(aryl ether/thioether) to polyester polymers is in the range from 99:1 to 1:99.

While not wishing to be bound by any particular theory regarding the copolymerization reaction of the present invention, it is believed that the probable mechanism comprises a distinct stepwise process.

The initial step involves chain cleavage by the nucleophilic anion of an exchange catalyst salt at one of the oxygen/sulfur-carbon bonds in the poly(aryl ether/thioether) polymer molecule:

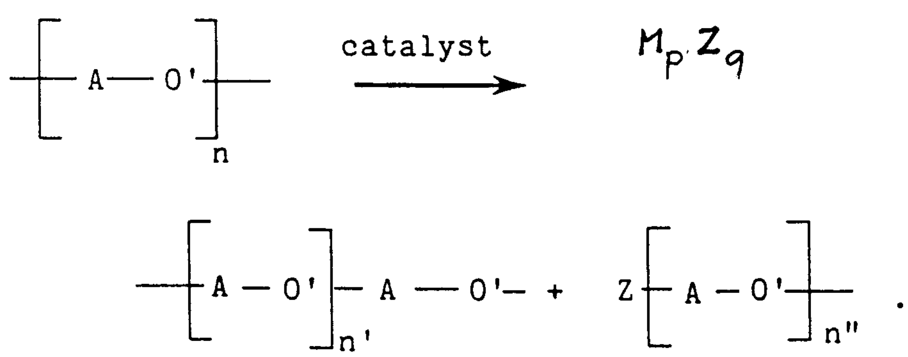


This produces two polymer fragments; a shortened poly(aryl ether/thioether) neutral polymer molecule with a terminus covalently bonded to the anion of the catalyst, and an anionic phenate terminated poly(aryl ether/thioether) polymer molecule.

In the second step, the anionic fragment produced in the first step attacks a polyester polymer molecule at an ester linkage:

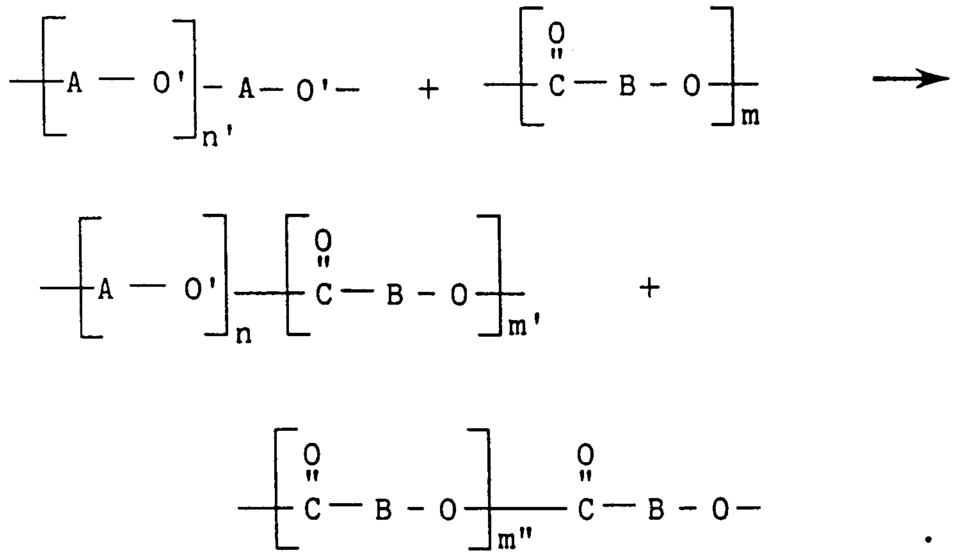

As in step one, a neutral molecule is formed as well as an anionic molecule. The neutral polymer molecule is a block copolymer which contains a poly(aryl ether/thioether) block and a polyester block. The resultant anionic polyester polymer molecule is free to attack other polymer molecules to form new polymers and new anionic molecules.

For example, the anionic polyester molecule may attack a poly(aryl ether/thioether) polymer molecule, thereby producing an anionic poly(aryl ether/thioether) molecule, thus:

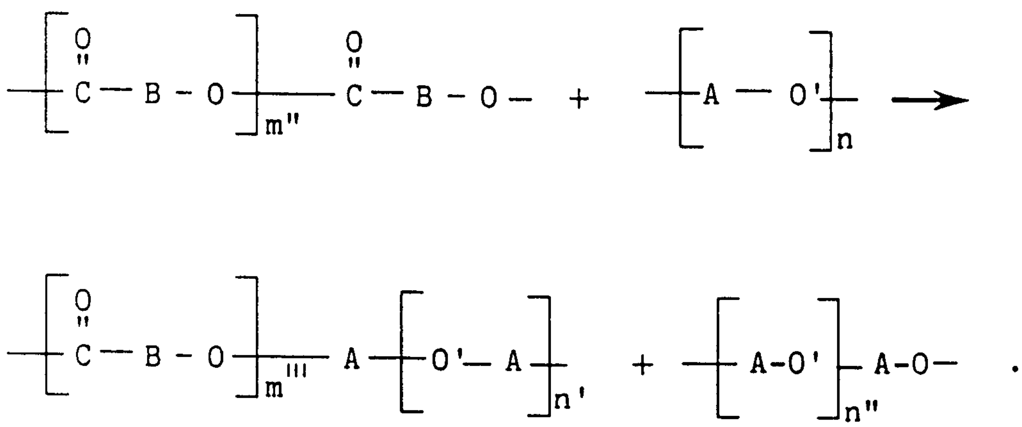

In the above formulae, -A-O'- is a repeat unit having one of the formulae I to XII; -CO-B-O- is a repeat unit having one of the formulae XII to XXV; M, Z, p and q are as previously defined; and n, m, n', n'', m', m'' and m''' represent the number of repeat units.

The anionic polyester and poly(aryl ether/thioether) molecules thus produced continue to attack the homopolymers and copolymers contained in the reaction mixture, thereby forming the block copolymers of the present invention.

As the reaction proceeds, the concentration of homopolymers decreases, and the concentration of block copolymer increases. Also, the copolymer block lengths decrease with time. The relative lengths of the poly(aryl ether/thioether) and polyester block segments tend to be proportional to their respective starting polymer percentages.

There are several advantages in the preparation of the poly(aryl ether/thioether)-polyester block copolymers of the present invention over the prior art. The present process may be practiced using relatively inexpensive blending equipment. The tremendous capital investment normally required to commercialize a new engineering thermoplastic is thereby circumvented. In the conventional method for the preparation of poly(aryl ether/thioether)-poly(aryl ester) block copolymers, it is necessary to prepare each block separately before linking them in a final reaction. The present invention provides for the customized

preparation of block copolymers having various block segment lengths, depending upon the reaction conditions. This is an important advantage since copolymer properties are strongly dependent on block segment lengths.

During the reactive blending process of the present invention, the amount of poly(aryl ether/thioether)-polyester copolymer increases, and the lengths of the block segments decrease. The properties of the resultant block copolymer product may be changed by modifying the reaction conditions, such as the length of time that the polymers are reacted together, the nature of the poly(aryl ether/thioether) and polyester polymers, or the reaction temperature. It must be noted, however, that the reaction conditions are not sharply critical to the successful preparation of the copolymers of the present invention. As the reactive blending process of the present invention proceeds, the copolymer block segments become sufficiently short such that no phase segregation occurs, and a homogeneous product results. The appearance of the mixture changes from opaque to translucent, and ultimately to clear.

Poly(aryl ether/thioether) and polyester polymers alternatively may be contacted under reactive conditions which result in a product wherein only one percent of the polymers have combined to form a poly-(aryl ether/thioether)polyester block copolymer.

The present invention may advantageously be employed to transform immiscible poly(aryl ether/thioether) and polyester polymer blends into a homogeneous block copolymer, or, during the early stages of the reactive blending process, a composition comprising a compatibilizing amount of the block copolymer and a residual amount of the polymers. It is known that block copolymers are often excellent compatibilizing agents for their constituent homopolymers. See Kirk-Othmer "Encyclopedia of Chemical Technology," 3rd Edition, vol. 18, p. 433 (1982).

The invention is more easily comprehended by reference to specific embodiments which are representative of the invention.

## Examples

Unless otherwise specified, $\eta$inh refers to inherent viscosities measured at 0.50 g/dL in $CH_2Cl_2$ at 25 °C. Intrinsic viscosities ($\eta$inh) were determined in $H_2SO_4$ at 25 °C by measuring the inherent viscosities at three different concentrations, typically 0.5, 0.2, and 0.08 g/dL, and extrapolating to zero concentration. Glass transition temperatures (Tg) were determined by differential scanning calorimetry (DSC) under nitrogen at 10 °C/minute. The inflection points of the transitions are quoted. The mechanical properties were determined on dog bone shaped bars milled from 0.0079 cm (0.020 inch) compression molded films according to ASTM D1708. The abbreviation 'Ph' represents a paraphenylene diradical, while '*m*Ph' represents metaphenylene diradical.

## Example 1

An Atlantic Research Corp. "Helicone" mixer Model 2-CV (300 mL capacity, constructed from 316 SS) was charged with 75.00 g of ARDEL® D-100 (a polyarylate of Bisphenol A and terephthalic/isophthalic acid manufactured by Amoco), 75.00 g of VICTREX® PES 3600G (a poly(ether sulfone) manufactured by I.C.I.), 50.00 g of diphenyl sulfone, and 75 mL of chlorobenzene. The mixture was heated to and maintained at 260 °C, and the chlorobenzene distilled off to remove water under an argon atmosphere while stirring at 100 RPM. Cesium fluoride (1.31 g) was introduced into the mixture, and the mixture was stirred for an additional 180 minutes. The resultant product was removed from the reactor and dissolved into 600 mL of $CH_2Cl_2$ and 200 mL of $Cl_2CHCHCl_2$. The resultant amber solution was filtered, then blended twice with 1 L of methanol. The off-white copolymer was recovered by conventional means and compression molded into a film from which test specimens were prepared.

The lengths of the poly(ether sulfone) blocks were determined as follows. A 1.4056 g sample of the copolymer was dissolved into a solution of 5 mL of methanol, 15 mL of $CH_2Cl_2$ and 1.0 g of KOH under a nitrogen atmosphere. After stirring overnight, the reaction was acidified with 6 M HCl, and an additional 10 mL of water and 15 mL of $Cl_2CHCHCl_2$ were added. The aqueous layer was separated and washed with 15 mL of $Cl_2CHCHCl_2$. The combined organic layers were dried with $MgSO_4$, filtered, and evaporated by conventional means to produce a viscous, amber oil. The oil was dissolved in a solution of 5 mL of $Cl_2CHCHCl_2$, 5 mL of acetic anhydride, and 2 drops of pyridine, then boiled for 10 minutes. The resultant solution was evaporated, then bulb-to-bulb distilled at 240 °C and 0.1 mm Hg vacuum to remove the diacetate of Bisphenol A. $^1$H NMR analysis ($CDCl_3$ solution) indicated that the pot residue contained $CH_3COO\text{-}(Ph\text{-}SO_2\text{-}Ph\text{-}O)_n\text{-}Ph\text{-}C(CH_3)_2\text{-}Ph\text{-}OOCCH_3$. The number average molecular weights of these blocks were determined by integrating the NMR results corresponding to the aromatic region from 7.8-8.0 ppm,

which represents 4 protons of the repeating unit, and comparing it to the integration of the acetate attached to the phenyl which was substituted with sulfone. This data indicated that n in the above formula was 18, corresponding to a number average molecular weight of 3,900 for the aryl ether block.

Example 2

A 200 mL resin kettle was charged with 15.00 g of ARDEL® D-100, 15.00 g of VICTREX® PES 3600G, 15.00 g of diphenyl sulfone, and 50 mL of chlorobenzene. The chlorobenzene was distilled off over a period of 1 hour. Cesium fluoride (132.9 mg) was added to the reaction mixture, which was then heated to 280 °C, and gradually further heated to 300 °C over a period of 75 minutes while being stirred. While maintaining the stirred reaction mixture at 300 °C for an additional 100 minutes, the melt appearance changed from opaque white to translucent amber. The resultant product was dissolved into 100 mL of $CH_2Cl_2$ and 50 mL of $Cl_2CHCHCl_2$, and slowly poured into 500 mL of methanol in a blender. The resultant off-white polymer was thereafter recovered by conventional means, and compression molded into test specimens whose properties are listed in Table I.

Example 3

The procedure described in Example 1 was repeated, excepting that VICTREX® PES 5200G (a poly-(ether sulfone) manufactured by I.C.I.) was used instead of VICTREX® PES 3600G, toluene was used in place of chlorobenzene, and the reaction proceeded for 195 minutes after the addition of 1.40 g of CsF catalyst. The copolymer was recovered by conventional means, and compression molded into test specimens whose properties are listed in Table I.

Comparison 1

A blend of VICTREX® PES 3600G and ARDEL® D-100 was prepared by mixing and extruding equal weights of the predried polymers. Test specimens were prepared whose properties are listed in Table I.

Table I

COMPARATIVE PROPERTIES

| | Example 1 | Example 2 | Example 3 | Comparison 1 | PA[1] | PES[2] |
|---|---|---|---|---|---|---|
| Appearance | opaque | opaque | clear | opaque | clear | clear |
| Number Ave. Mol. Weight PES Blocks | 3,900 | 3,500 | 2,200 | - | - | - |
| $\eta inh^3$ (dL/g) | 0.36 | 0.38 | 0.415 | 0.40 | 0.50 | 0.40 |
| Modulus (MPa) | 2560 | 2830 | 2870 | brittle | 2180 | 3010 |
| (Kpsi) | (371) | (411) | (416) | | (316) | (437) |
| Tens. Yield (MPa) | 75.8 | 82.1 | 80.7 | - | 66.9 | 84.1 |
| (Kpsi) | (11.0) | (11.9) | (11.7) | | (9.7) | (12.2) |
| Tens. Break (MPa) | 64.8 | 68.3 | 69.0 | - | 62.1 | 66.2 |
| (Kpsi) | (9.4) | (9.9) | (10.0) | | (9.0) | (9.6) |
| Tg (°C) | 192/214[4] | 184/205[4] | 197 | 187/220 | 194 | 220 |

[1]ARDEL® D-100, polyarylate from Amoco, film molded at 330°C.
[2]VICTREX® 3600G, poly(ether sulfone) from I.C.I., film molded at 350°C.
[3]Determined at 25°C in $CH_2Cl_2$ at 0.5 g/dL.
[4]These transitions are very broad.

Table I compares three block copolymers of the present invention with a simple blend of the polymers and the polymers themselves. The merging of glass transition temperatures is apparent from the data. As the copolymer blocks are shortened by the exchange process, a block length size is approached, generally between 3,500 and 2,200, wherein the two different block segments no longer phase separate, resulting in a clear film exhibiting a singular Tg.

The beneficial effect of the reactive blending process of the present invention was immediately apparent following the fabrication of the film test specimens. The blend (Comparison 1) produced a film which was too brittle to remove intact from the casting die, while the reactive blending process resulted in a tough, creasable film. An unexpected result was that the modulus, tensile at yield and tensile at break values were much better than the weighted averages for the two polymers.

Example 4

A 200 mL resin kettle was charged with 10.00 g of VICTREX® PEEK 380P (a poly(ether ether ketone) manufactured by I.C.I.), 10.00 g of ARDEL® D-100, 10.00 g of diphenyl sulfone, and 25 mL of chlorobenzene. The chlorobenzene was distilled off, and the reaction mixture temperature raised to 350 °C briefly, then allowed to cool to 325 °C before adding 350.2 mg of CsF. The reaction mixture temperature was then raised to 345 °C over a period of 25 minutes, and maintained for an additional 145 minutes. The resultant product was recovered (28.02 g) by conventional means, and placed in a Soxlet extractor with refluxing $CH_2Cl_2$ overnight. An insoluble polymer (16.27 g) was recovered and dried in a vacuum oven at 130 °C. The hazy $CH_2Cl_2$ solution was evaporated, and heated to 200 °C at 0.1 mm Hg for 30 minutes to remove diphenyl sulfone, resulting in 2.87 g of soluble polymer. The soluble fraction contained only polyarylate (confirmed by $^1H$ NMR analysis), while the insoluble portion contained a copolymer having a ratio of poly-(ether ether ketone) to polyarylate of 59:41. Actual $^1H$ NMR analysis in a pentafluorophenol solution

indicated a ratio of 58:42.

A film test specimen was prepared from the $CH_2Cl_2$ insoluble fraction polymer by compression molding at 360 °C. The first DSC scan of the ice water quenched film indicated a Tg at 164 °C, a crystallization exotherm at 251 °C, and a melting endotherm at 333 °C. Additional properties are listed in Table II.

Comparison 2

A 200 mL resin kettle was charged with 10.00 g of VICTREX® PEEK 380P, 10.00 g of ARDEL® D-100, and 25 ml of chlorobenzene. The mixture was heated to and maintained at a temperature of 360 °C for 45 minutes. The resultant polymer was recovered by conventional methods, and test specimens were compression molded at 370 °C. The specimens were too brittle to prepare tensile bars, but a reasonably tough film was prepared by quickly removing the specimen from the molding machine and quenching it in ice water. Tensile bars were prepared from the amorphous film, a portion of which were annealed at 250 °C for 60 minutes. The inherent viscosity of the blend was 0.75 dL/g (0.50 g/dL in $C_6F_5OH$ at 45 °C). The first DSC scan of the ice water quenched sample indicated a Tg at 148 °C, crystallization exotherm at 211 °C, and a melting endotherm at 336 °C. The second scan of the same sample indicated a Tg at 155 °C and a melting endotherm at 334 °C. Other properties are listed in Table II.

Table II

COMPARATIVE PROPERTIES[1]

| | Example 4 | Comparison 2 | PA[2] | PEEK[3] |
|---|---|---|---|---|
| Modulus (MPa) | 2630 (3250) | 2670 (2460) | 2180 | (3930) |
| (Kpsi) | 382 (471) | 387 (357) | 316 | (570) |
| Tens. Yield (MPa) | 66.9 (84.1) | 58.6 (67.6) | 66.9 | (102.7) |
| (Kpsi) | 9.7 (12.2) | 8.5 (9.8) | 9.7 | (14.9) |
| Tens. Break (MPa) | 58.6 (78.6) | 55.8 (64.1) | 62.1 | (90.3) |
| (Kpsi) | 8.5 (11.4) | 8.1 | 9.0 | (13.1) |
| Elon. @ Break (%) | >25 (13) | 15 (5) | >25 | (7) |
| Weight Ave. Mol. Weight PEEK Blocks | 9,300 | 26,500 | - | (26,500) |
| Number Ave. Mol. Weight PEEK Blocks | 5,300 | - | - | - |
| $\eta inh^4$ (dL/g) | 0.93 | 0.75 | 0.61 | 0.89 |

[1]Data is for as-molded film; data in parentheses is after annealing for 15 minutes at 250°C.
[2]ARDEL® D-100, polyarylate from Amoco, film molded at 330°C.
[3]VICTREX® PEEK 380P, poly(ether ether ketone) from I.C.I., film molded at 370°C and allowed to cool in the press.
[4]Determined at 45°C in $C_6F_5OH$ at 0.5 g/dL.

The properties of the block copolymer (Example 4) were superior to those of either the blend (Comparison 2) or the weighted average properties of the polymers.

Example 5

A 200 mL resin kettle was charged with 10.00 g of ULTEM® 1000 (a poly(ether imide) manufactured by General Electric), 10.00 g of ARDEL® D-100, 10.00 g of diphenyl sulfone, and 131.4 mg of CsF. The temperature of the stirred reaction mixture was increased to and maintained at 345 °C for 60 minutes. The resultant copolymer was recovered by conventional methods, then dissolved into 235 mL of $CH_2Cl_2$. The copolymer was isolated by precipitation into 700 mL of methanol. The resultant fibrous polymer was twice reblended with a 75:25 mixture of hexane and acetone, filtered, then placed in a vacuum oven overnight at 150 °C. A translucent film (0.020 inch) was molded at 300 °C, having the properties listed in Table III.

Comparison 3

Two solutions of 40.00 g of ULTEM® 1000 in 500 mL of $CH_2Cl_2$ and 40.00 g of ARDEL® D-100 in 500 mL of $CH_2Cl_2$ were combined and precipitated into 2 L of methanol. The blend was filtered then dried in a vacuum oven. An opaque film (0.020 inch) was molded at 300 °C, having the properties listed in Table III.

Table III

COMPARATIVE PROPERTIES

| | Example 5 | Comparison 3 | PA[1] | PEI[2] |
|---|---|---|---|---|
| Modulus (MPa) | 3020 | 2500 | 2180 | 3290 |
| (Kpsi) | 438 | 362 | 316 | 477 |
| Tens. Yield (MPa) | 89.0 | 74.5 | 66.90 | 102.0 |
| (Kpsi) | 12.9 | 10.8 | 9.7 | 14.8 |
| Tens. Break (MPa) | 80.7 | 66.90 | 62.1 | 88.3 |
| (Kpsi) | 11.7 | 9.7 | 9.0 | 12.8 |
| Elon. @ Break (%) | 7 | 15 | >25 | 11 |
| $\eta_{inh}$[3] (dL/g) | 0.43 | 0.45 | 0.61 | 0.38 |

[1]ARDEL® D-100, polyarylate from Amoco, film molded at 330°C.
[2]ULTEM® 1000, poly(ether imide) from General Electric, film molded at 330°C.
[3]Determined at 25°C in $CH_2Cl_2$ at 0.5 g/dL.

Example 6

A Haake mixer was heated to 300 °C and charged with 140 g of VICTREX® 3600G, 5 g of CsF and 60 g of VECTRA® A900 (a copolyester prepared from p-hydroxybenzoic acid and 2-hydroxy-6-naphthoic acid, manufactured by Hoechst-Celanese). After 1 hour of stirring at 30 RPM, the product was removed from the mixer.

The following hydrolysis experiment was performed to analyze the poly(ether sulfone) block length in the copolymer product. A portion of the polymer (2.0 g) was ref luxed under nitrogen with 20 g phenol and 2.0 g sodium phenoxide for 48 hours. Concentrated HCl was then added to neutralize the base, and the phenol was removed by bulb-to-bulb distillation at 85 °C for 30 minutes at 0.1 mm Hg vacuum. The pot residue was then refluxed with 3 mL methanol, 25 mL $Cl_2CHCHCl_2$, and 3 drops $H_2SO_4$ overnight to esterify the carboxylic acid ends of the oligomers. The acid was neutralized with 1 M $NaHCO_3$, and the reaction mixture was washed with 50 mL water. The organic layer was dried with $MgSO_4$ and evaporated. The residue was treated with 40 mL acetic anhydride, 15 mL $Cl_2CHCHCl_2$, and 3 drops pyridine. After 1 hour of reflux, the reaction was evaporated to remove excess reactants and solvent. The fragments from the

ester blocks, methyl p-acetoxybenzoate and methyl 2-acetoxy-6-naphthoate, were removed by bulb-to-bulb distillation at 200 °C for 30 minutes at 0.1 mm Hg vacuum. The residue was analyzed by $^{1}H$ and $^{13}C$ NMR which indicated a poly(ether sulfone) oligomer of number average molecular weight 1,600. The end groups of this oligomer were shown to be an equal molar ratio of acetate and a mixture of methyl benzoate and methyl naphthoates, thus:

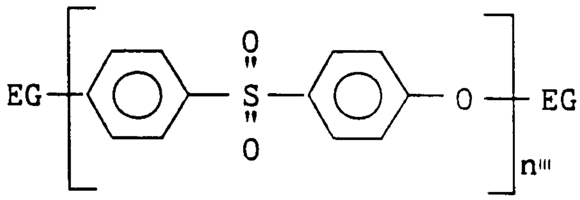

,

wherein EG is

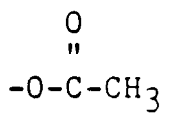

or

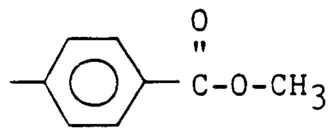

or

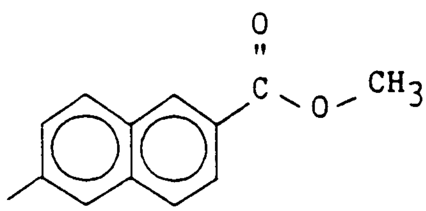

;

and
n''' is the number of repeated units.

Comparison 4

The procedure of Example 6 was repeated, excepting that no catalyst was added to the mixture. The resultant product was subjected to the same hydrolysis analysis. The non-volatile residue was determined to be a high molecular weight poly(aryl ether), thereby demonstrating that the catalyst is required for copolymer formation.

**Claims**

1. A process for preparing a homogeneous block copolymer comprising one or more activated poly (aryl ether/thioether) blocks comprising from 2 to 50 repeat units corresponding to the general formulae:

I

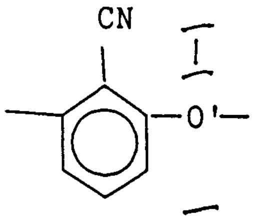 ;

II

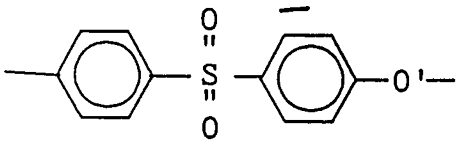 ;

III

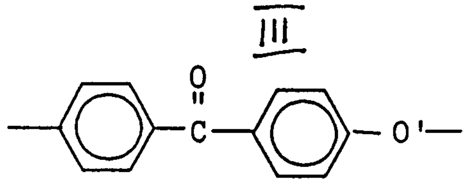 ;

IV

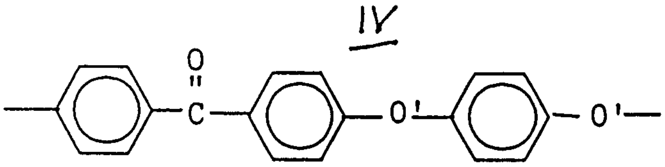 ;

V

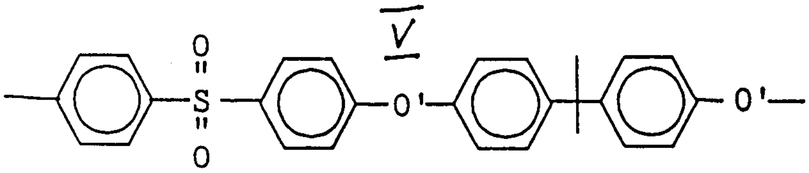 ;

VI

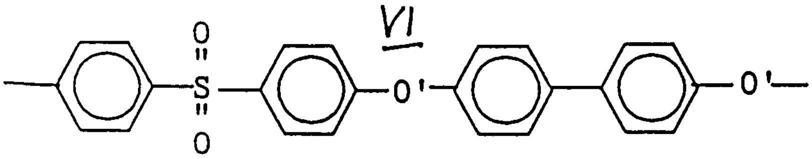 ;

VII VIII

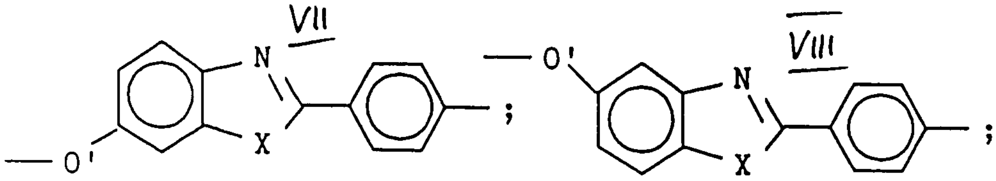

IX

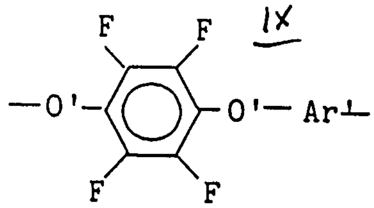

X

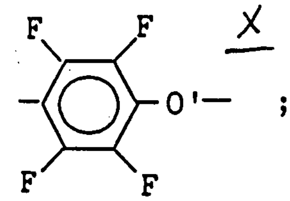

XI

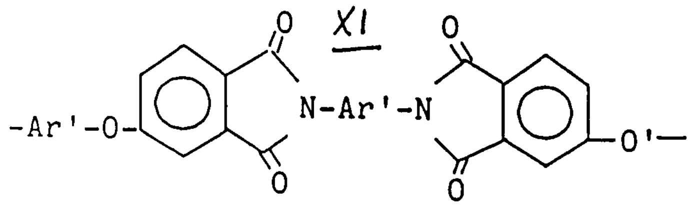

or

XII

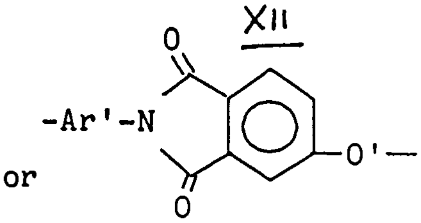

wherein each Ar' is independently m-phenylene, p-phenylene, p-$C_6H_4C(CH_3)_2$p-$C_6H_4$, p-$C_6H_4$Op-$C_6H_4$, p-$C_6H_4$Sp-$C_6H_4$, p-$C_6H_4CH_2$p-$C_6H_4$, p-$C_6H_4C_6H_4$, or p-$C_6H_4SO_2$p-$C_6H_4$; X is N-R, S or O; O' is oxygen in the case of an ether and sulfur in the case of a thioether;

and one or more ester blocks comprising from 2 to 50 aliphatic or aromatic repeat units corresponding to the

formulae:

XIII

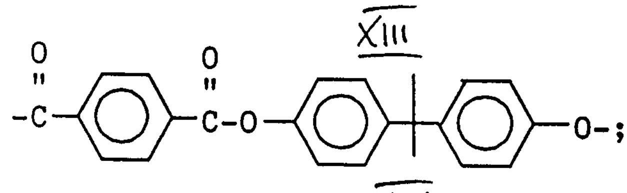

XIV

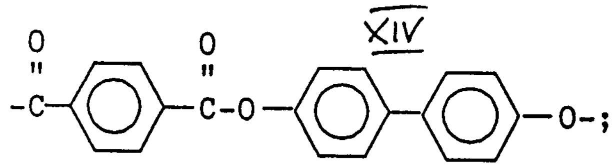

XV

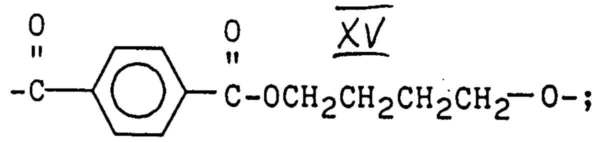

XVI

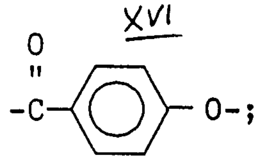

XVII

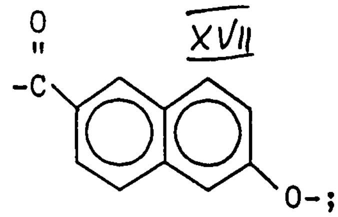

XVIII

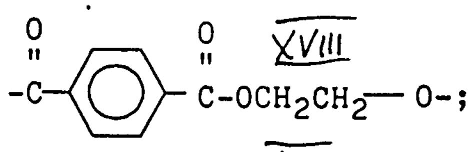

XIX

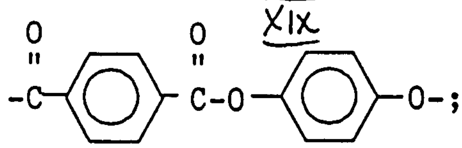

XX

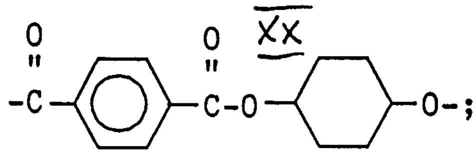

XXI

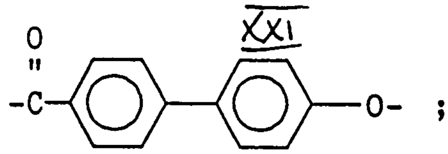

XXII

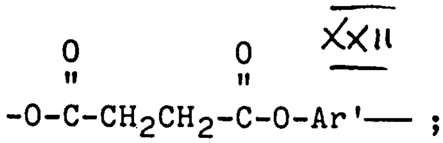

;

XXIII

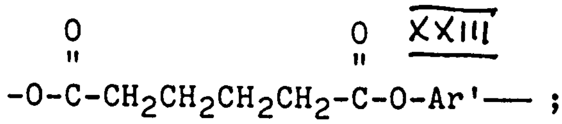

;

XXIV

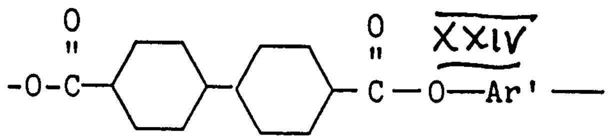

; or

XXV

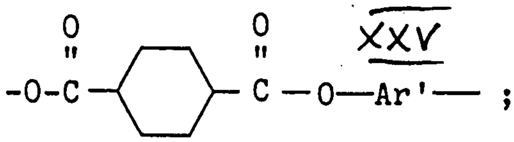

;

wherein Ar' is as previously defined;

the aromatic portion of said poly(aryl ether/thioether) blocks being joined to the remainder of the copolymer molecule by one ether/thioether linkage and one ester linkage;

the steps of the process comprising contacting at least one activated poly(aryl ether) or poly(aryl thioether) comprising from 2 to 50 repeat units corresponding to the aforesaid formulae I to XII with at least one aliphatic or aromatic polyester polymer comprising from 2 to 50 repeat units corresponding to the aforesaid formulae XIII to XXV in the presence of an exchange catalyst corresponding to the formula $M_pZ_q$,

wherein M represents a monovalent or multivalent metal ion, Z is a halide, carbonate, bicarbonate, phenoxide, alkoxide, cyanide, nitrate, nitrite, hydroxide, phosphate, or aryl or alkyl carboxylate ion, and p and q are each independently whole numbers in the range from 1 to 6 which satisfy chemical valency requirements,

at a temperature from 100 °C to 400 °C and above the highest glass transition temperature of the polymers for a time sufficient to cause formation of the block copolymer wherein the lengths of the copolymer blocks are decreased in comparison with the respective lengths of the starting homopolymer molecules.

**2.** The process according to Claim 1, wherein the contacting is carried out in the presence of an organic solvent.

**3.** The process according to Claim 1, wherein the catalyst is present in an amount from 0.01 to 10.0 weight percent relative to the total weight of polymers.

**4.** A homogeneous poly(aryl ether/thioether)polyester block copolymer, comprising:
one or more activated poly(aryl ether/thioether) blocks comprising from 2 to 50 repeat units corresponding to the general formulae I to XII, as defined in claim 1; and
one or more ester blocks comprising from 2 to 50 aliphatic or aromatic repeat units corresponding to the general formulae XIII to XXV, as defined in claim 1;
the aromatic portion of said poly(aryl ether/thioether) blocks being joined to the remainder of the copolymer molecule by one ether/thioether linkage and one ester linkage.

## Patentansprüche

**1.** Verfahren zur Herstellung von homogenen Blockcopolymeren, enthaltend einen oder mehrere aktivierte Poly(arylether/arylthioether)-Blöcke mit von 2 bis 50 sich wiederholenden Einheiten der Formeln

I

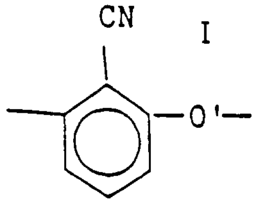

;

II

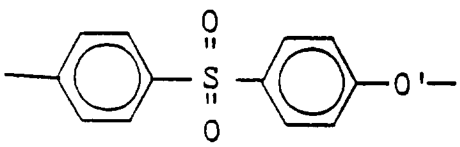

;

III

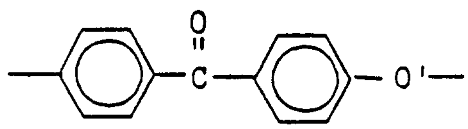

;

IV

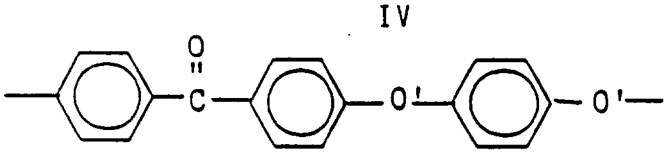

;

V

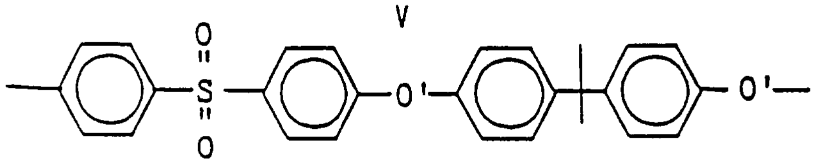

;

VI

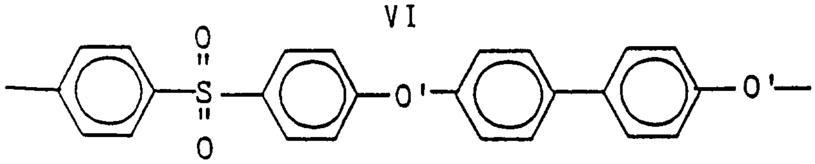

;

VII

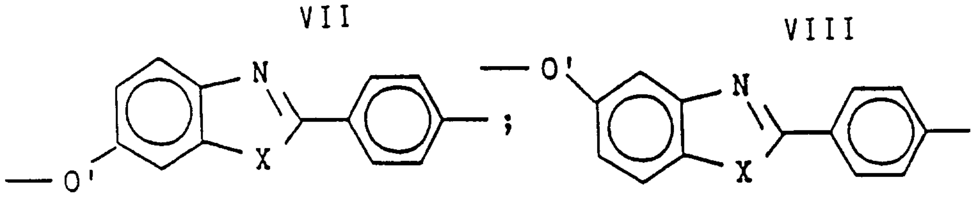

;

VIII

;

IX

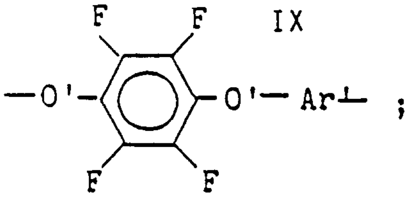

;

X

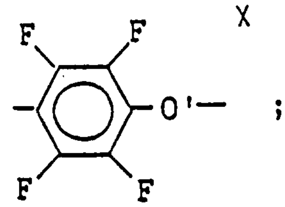

;

XI

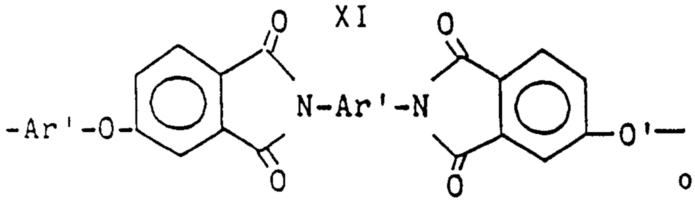

oder

XII

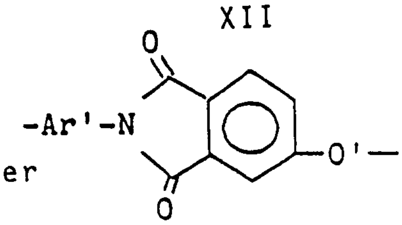

in denen jeder Rest Ar' unabhängig m-Phenylene, p-Phenylen, p-$C_6H_4C(CH_3)_2$p-$C_6H_4$, p-$C_6H_4$Op-$C_6H_4$, p-$C_6H_4$Sp-$C_6H_4$, p-$C_6H_4CH_2$p$C_6H_4$, p-$C_6H_4C_6H_4$ oder p-$C_6H_4SO_2$p-$C_6H_4$ bedeutet; X für N-R, S oder O steht; O' im Falle eines Ethers Sauerstoff und im Falle eines Thioethers Schwefel bedeutet, und einen oder mehrere Ester-Blöcke mit von 2 bis 50 sich wiederholenden aliphatischen oder aromatischen Einheiten der Formeln

XIII

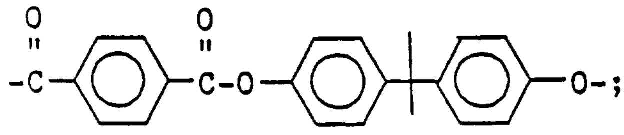

XIV

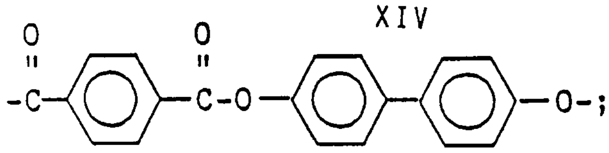

XV

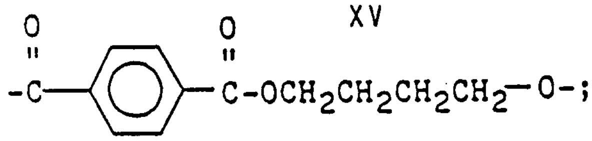

XVI

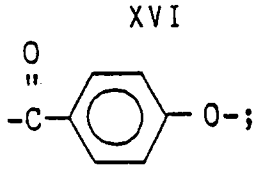

XVII

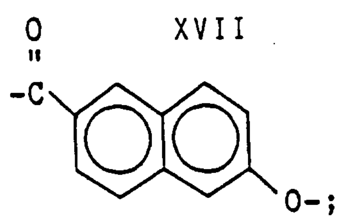

XVIII
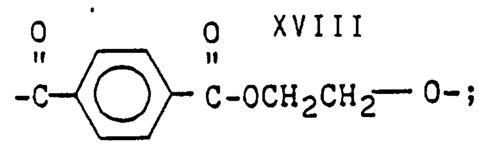

XIX
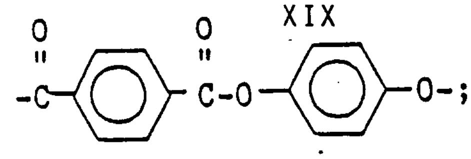

XX
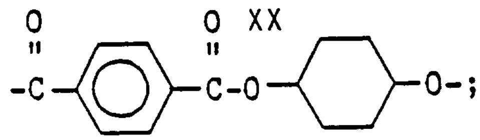

XXI
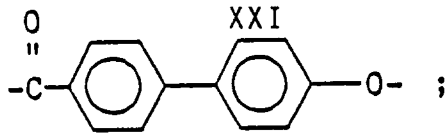

XXII
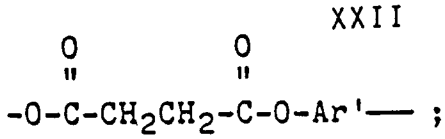

XXIII
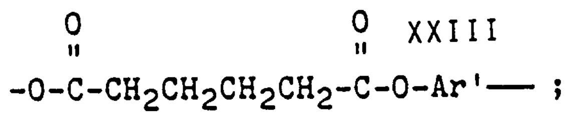

XXIV
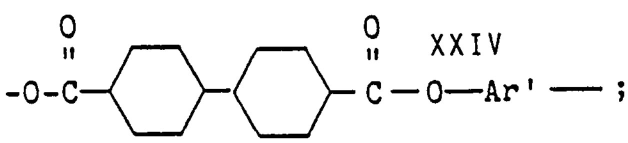
oder

XXV
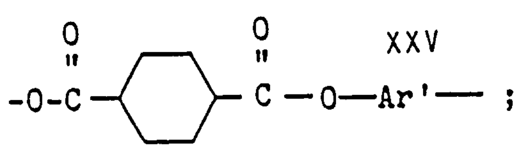

in denen Ar' die angegebene Bedeutung hat;
wobei der aromatische Teil der Poly(arylether/arylthioether)-Blöcke mit dem restlichen Teil des Copolymeren über eine Ether/Thioether-Bindung und über eine Ester-Bindung verbunden ist;
dadurch gekennzeichnet, daß man mindestens einen aktivierten Poly(arylether) oder Poly(arylthioether) mit von 2 bis 50 sich wiederholenden Einheiten der Formeln I bis XII mit mindestens einem aliphatischen oder aromatischen Polyester-Polymeren mit von 2 bis 50 sich wiederholenden Einheiten der Formeln XIII bis XXV in Gegenwart eines Austauschkatalysators der Formel $M_pZ_q$ in Berührung bringt,
in der M ein ein- oder mehrwertiges Metallion bezeichnet, Z für ein Halogenid-, Carbonat-, Bicarbonat-, Phenolat-, Alkoholat-, Cyanid-, Nitrat-, Nitrit-, Hydroxid-, Phosphat- oder Aryl- oder Alkylcarboxylat-Ion steht und p sowie q jeweils unabhängig ganze Zahlen im Bereich von 1 bis 6 bedeuten, die chemische Valenzanforderungen erfüllen,
bei einer Temperatur von 100 bis 400 °C und oberhalb der höchsten Glasübergangstemperatur der Polymeren und für einen Zeitraum, der ausreicht, um das Blockcopolymere entstehen zu lassen, in dem die Längen der Copolymer-Blöcke im Vergleich zu den entsprechenden Längen der als Ausgangsstoffe dienenden Moleküle der Homopolymeren vermindert sind.

2. Verfahren nach Anspruch 1, wobei die als Ausgangsstoffe dienenden Homopolymeren in Gegenwart eines organischen Lösungsmittels miteinander in Berührung gebracht werden.

3. Verfahren nach Anspruch 1, wobei der Katalysator in einer Menge von 0,1 bis 10 Gewichtsprozent, bezogen auf das Gesamtgewicht der Polymeren, eingesetzt wird.

4. Homogenes Poly(arylether/arylthioether)-Polyester-Blockcopolymeres, enthaltend:
einen oder mehrere aktivierte Poly(arylether/arylthioether)-Blöcke mit von 2 bis 50 sich wiederholenden Einheiten der Formeln I bis XII, wie in Anspruch 1 definiert; und
einen oder mehrere Ester-Blöcke, enthaltend von 2 bis 50 sich wiederholende aliphatische oder aromatische Einheiten der Formeln XIII bis XXV, wie in Anspruch 1 definiert;
wobei der aromatische Teil der Poly(arylether/arylthioether)-Blöcke mit dem verbleibenden Teil des Moleküls des Copolymeren über eine Ether/Thioether-Bindung und über eine Ester-Bindung verbunden ist.

**Revendications**

1. Procédé pour préparer un copolymère séquencé homogène comprenant une ou plusieurs séquences activées de poly(aryléther/thioéther) comprenant de 2 à 50 motifs répétés correspondant aux formules générales :

I

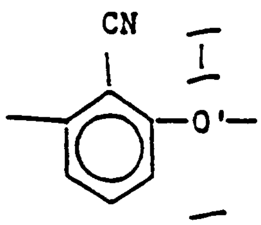

;

II

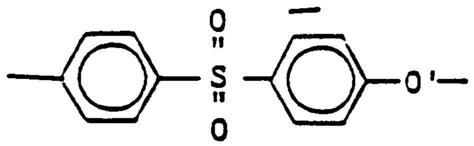

;

III

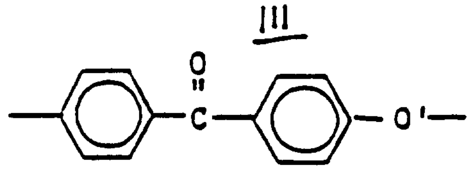

;

IV

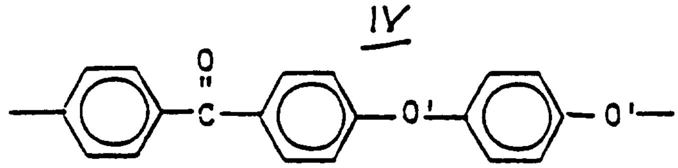

;

V

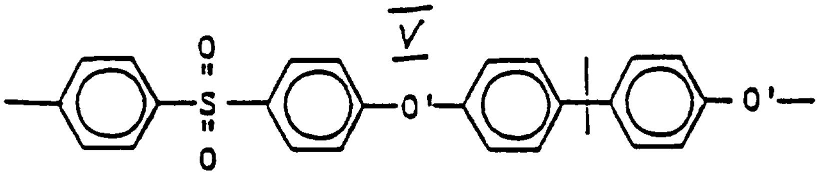

;

VI

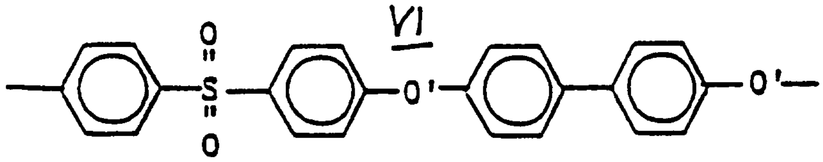

;

VII
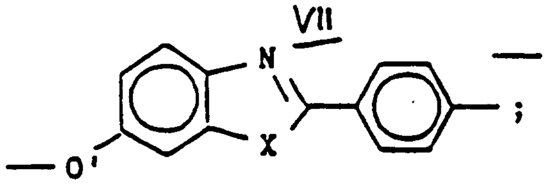
VIII
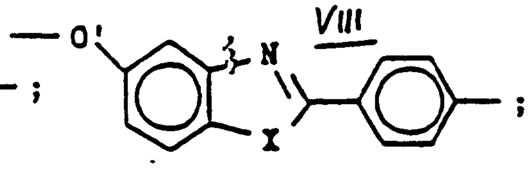

IX
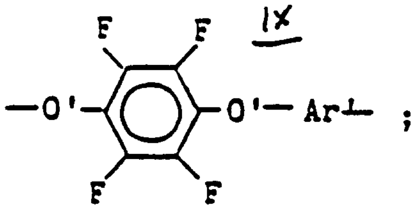
X
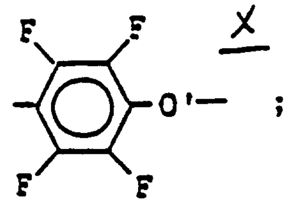

XI
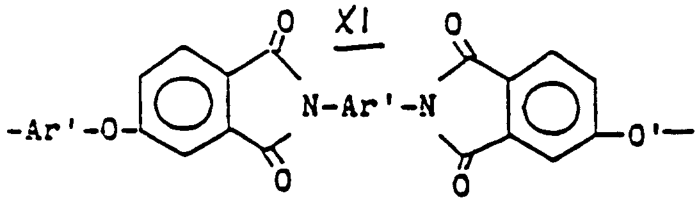
ou
XII
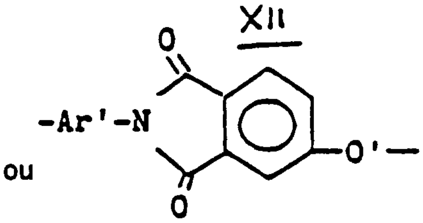

dans lesquelles chaque Ar' est, indépendamment, un groupe m-phénylène, p-phénylène, p-$C_6H_4C$-$(CH_3)_2$p-$C_6H_4$, p-$C_6H_4$Op-$C_6H_4$, p-$C_6H_4$Sp-$C_6H_4$, p-$C_6H_4CH_2$p-$C_6H_4$,le p-$C_6H_4$-$C_6H_4$, ou p-$C_6H_4SO_2$p-$C_6H_4$,X est N-R, S ou O, O'est un atome d'oxygène dans le cas d'un éther et un atome de soufre dans le cas d'un thioéther;

et une ou plusieurs séquences ester comprenant de 2 à 50 motifs répétés aliphatiques ou aromatiques correspondant aux formules:

XIII

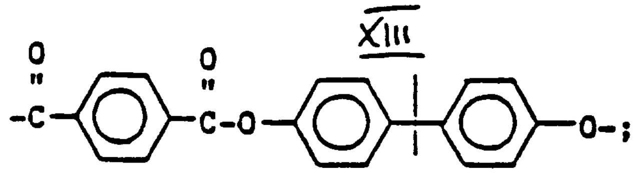

XIV

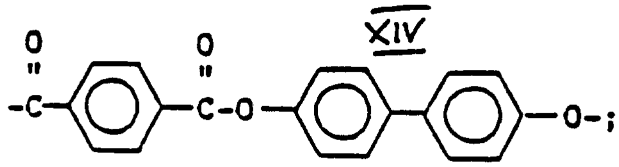

XV

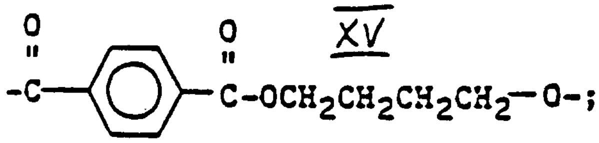

XVI

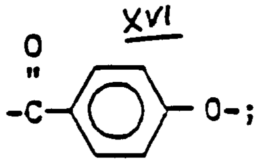

XVII

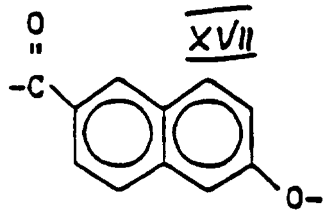

XVIII

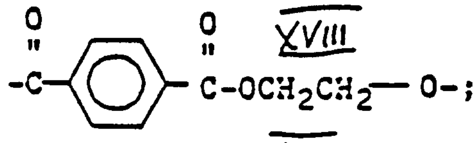

XIX

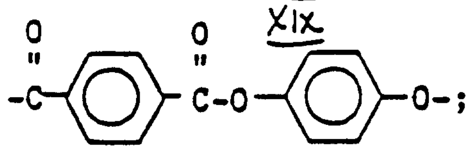

XX

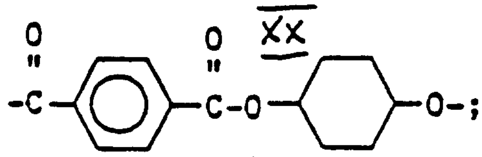

XXI

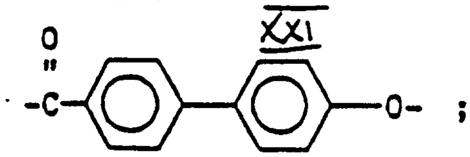

XXII

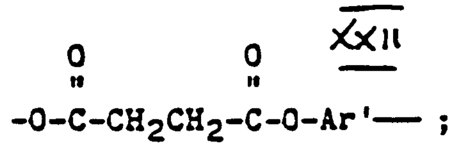

XXIII

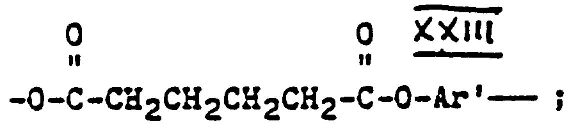

XXIV

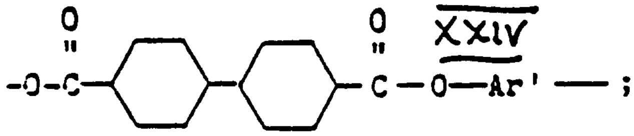

XXV

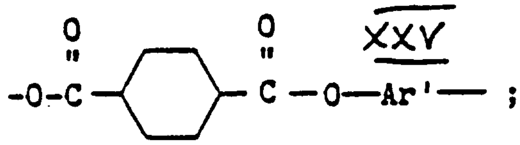

dans lesquelles Ar' est tel que défini précédemment;
la fraction aromatique desdites séquences poly(aryléther/thioéther) étant reliées au restant de la molécule copolymère par une liaison éther/thioéther et une liaison ester;

les étapes du procédé comprenant les opérations consistant à mettre en contact au moins un poly-(aryléther) ou un poly(aryl/thioéther) activé comprenant de 2 à 50 motifs répétés correspondant aux formules ci-dessus I à XII avec au moins un polymère polyester aliphatique ou aromatique comprenant de 2 à 50 motifs répétés correspondant aux formules susdites XIII à XXV en présence d'un catalyseur d'échange correspondant à la formule $M_pZ_q$

dans laquelle M représente un ion métallique monovalent ou multivalent, Z est un ion halogénure, carbonate, bicarbonate, phénoxyde, alkoxyde, cyanure, nitrate, nitrite, hydroxyde, phosphate ou aryl- ou alkyl-carboxylate, et p et q sont, chacun indépendamment, des nombres entiers dans la gamme de 1 à 6, qui satisfont les exigences de valence chimique,
à une température de 100 °C à 400 °C et au-dessus de la température de transition vitreuse la plus élevée des polymères, pendant une durée suffisante pour provoquer la formation du copolymère séquencé, les longueurs des séquences du copolymère étant diminuées par rapport aux longueurs respectives des molécules des homopolymères de départ.

**2.** Procédé selon la revendication 1, dans lequel on effectue la mise en contact en présence d'un solvant organique.

**3.** Procédé selon la revendication 1, dans lequel le catalyseur est présent en une quantité de 0,01 à 10,0 pourcent en poids par rapport au poids total des polymères.

**4.** Copolymère séquencé homogène poly(aryléther/thioéther)-polyester, comprenant:
une ou plusieurs séquences activées poly(aryléther/thioéther) comprenant de 2 à 50 motifs répétés correspondant aux formules générales I à XII, telles que définies dans la revendication 1; et
une ou plusieurs séquences ester comprenant de 2 à 50 motifs répétés aliphatiques ou aromatiques correspondant aux formules générales XIII à XXV, telles que définies dans la revendication 1;
la fraction aromatique desdites séquences poly(aryléther/thioéther) étant reliées au restant de la molécule de copolymère par une liaison éther/thioéther et une liaison ester.